# EUROPÄISCHE PATENTSCHRIFT

(11) **EP 0 812 263 B1**
(45) Veröffentlichungstag und Bekanntmachung des Hinweises auf die Patenterteilung: **25.11.1998**
(21) Anmeldenummer: 96901694.8
(22) Anmeldetag: 01.02.1996
(51) Int. Cl.: B32B 31/12, B31F 1/28, B32B 29/08

(54) **VERFAHREN ZUM HERSTELLEN VON WELLPAPPE UND EINRICHTUNG HIERFÜR**
CORRUGATED CARDBOARD MANUFACTURING PROCESS AND DEVICE
PROCEDE ET DISPOSITIF DE FABRICATION DE CARTON ONDULE

(30) Priorität: 27.02.1995 DE 19506777
(43) Veröffentlichungstag der Anmeldung: 17.12.1997
(73) Patentinhaber: BHS Corrugated Maschinen- und Anlagenbau GmbH, 92729 Weiherhammer (DE)
(72) Erfinder: MOSBURGER, Hans, D-92729 Weiherhammer (DE)
(74) Vertreter: Eder, Thomas, Dr.-Ing.
(86) Internationale Anmeldenummer: DE9600159
(87) Internationale Veröffentlichungsnummer: WO9626835

(56) Entgegenhaltungen:
- EP-A- 0 037 332
- EP-A- 0 130 718
- EP-A- 0 155 766
- EP-A- 0 179 395
- EP-A- 0 362 423
- EP-A- 0 380 083
- EP-A- 0 574 872
- DE-A- 3 440 542
- GB-A- 2 034 608
- US-A- 4 495 890

## Beschreibung

Die Erfindung betrifft ein Verfahren zum Herstellen von Wellpappe mit den Merkmalen des Patentanspruches 1, sowie eine Einrichtung hierfür mit den Merkmalen des Patentanspruches 5.

Es ist bekannt, Wellpappe dadurch herzustellen, daß man mehrere Teilbahnen zusammenführt und miteinander verklebt. Zum Beispiel werden bei einer Doppel-Doppel-Wellpappe drei Teilbahnen, nämlich zwei einseitige Wellpappenteilbahnen und eine glatte Deckbahn zusammengeführt. Es ist bekannt, diese Teilbahnen einer einzigen Zusammenführungsstelle zuzuführen, an die sich eine Heizvorrichtung ggf. mit Fördergurt anschließt. Nachteilig ist bei diesem bekannten Herstellungsverfahren, daß die Abstände zwischen den Leimauftragsstellen für die Teilbahnen und der Zusammenführungsstelle für die Teilbahnen unnötig groß sind. Der notwendige Wärmeeintrag in die Teilbahnen und die Restwärme im Bereich der Zusammenführungsstelle der Teilbahnen ist meist unbefriedigend. Zudem sind die Leimwerke und damit die Leimauftragsstelle in ihrem Abstand zur Zusammenführungsstelle der Teilbahnen unabhängig von der Bahngeschwindigkeit angeordnet. Bei erhöhter Bahngeschwindigkeit besteht daher die Gefahr, daß der Feuchtigkeitsentzug aus dem Leimauftrag nicht ausreichend ist, bevor die Teilbahnen die Zusammenführungsstelle erreichen. Eine gute Verklebung der Teilbahn erfordert dann eine unnötig lange Heizvorrichtung, über die die zusammengeklebten Teilbahnen zu führen sind. Bei geringer Bahngeschwindigkeit wird dem Leim zuviel Feuchtigkeit entzogen. Die Verklebung ist mangelhaft.

Der Erfindung liegt die Aufgabe Zugrunde, ein Verfahren und eine Einrichtung zu schaffen, die es ermöglichen, den optimalen Feuchtigkeitsentzug aus den Teilbahnen auch bei unterschiedlichen Bahngeschwindigkeiten und möglichst kurzem Abstand sowohl zwischen Vorheizeinrichtung und Leimauftragsstelle als auch zwischen Leimauftragsstelle und Zusammenführungsstelle der Teilbahnen zu gewährleisten. Außerdem soll die Einrichtung einen raumgedrängten Aufbau besitzen.

Die Erfindung löst die Aufgabe, die optimale Entfeuchtung des Leimauftrages auch bei veränderbarer Bahngeschwindigkeit zu gewährleisten, dadurch, daß der Abstand zwischen Leimauftragsstelle und Zusammenführungsstelle abhängig von der Bahngeschwindigkeit verändert wird.

Hierdurch wird der Vorteil erreicht, daß für die optimale Entfeuchtung der Abstand zwischen Vorheizeinrichtung und Leimauftragsstelle der Teilbahn und Zusammenführungsstelle der Teilbahn so kurz wie nötig, abhängig von der Bahngeschwindigkeit, gewählt werden kann. Die sich an die Zusammenführungsstelle der Teilbahnen anschließende Heizvorrichtung kann dann so kurz wie möglich gehalten werden.

Nach einer Ausgestaltung der Erfindung werden mehrere Teilbahnen zu einer einzigen Zusammenführungsstelle geführt. Hierdurch ergibt sich ein raumgedrängter Aufbau der Einrichtung.

Nach einer anderen Ausgestaltung der Erfindung werden die Leimwerke für die Teilbahnen übereinander vorgesehen. Zudem ist es möglich, die Verschiebung bzw. Lageveränderung der Leimwerke und damit der Leimauftragsstelle in Zusammenhang mit der Zusammenführungsstelle der Teilbahnen einfacher zu gestalten. Um einen möglichst gedrängten Aufbau und damit optimale Abstände zu erreichen, ist eine entsprechende Leimwerkskonstruktion erforderlich.

Um den Wärmeeintrag in die Teilbahn bzw. in die zu verklebende Wellpappenbahn zu verbessern, werden die Teilbahnen vor und/oder nach dem Leimauftrag von ihren beiden Außenseiten her erwärmt.

Weitere Ausgestaltung der Erfindung ergeben sich aus den Unteransprüchen.

Die Erfindung wird nachfolgend anhand einer schematischen Zeichnung in Seitenansicht der Einrichtung zur Herstellung einer Wellpappenbahn aus mehreren Teilbahnen näher erläutert.

Die Einrichtung 1 sieht Leimwerke 2, 3, vorzugsweise übereinander angeordnet vor. Die Leimwerke 2, 3 besitzen einen nicht im einzelnen erläuterten Aufbau. Sie besitzen Leimübertragswalzen 4, 5; diese werden in der angegebenen Pfeilrichtung angetrieben. Mit diesen arbeiten Dosierwalzen 6, 7 zusammen. Der dosierte Leimauftrag wird von der Leimübertragswalze 4, 5 mitgenommen und den Teilbahnen 10, 11 zugeführt. Die Leimzuführung erfolgt über ortsfeste Rohre 8, 9, die mit Leim gefüllt sind. Überschüssiger Leim wird über Schaber 42, 43 von den Dosierwalzen 6, 7 abgerakelt und über Auffangrinnen 45, 46 einer Pumpe zugeführt. Der Leim kann über Öffnungen 39, 40 in den Rohren 8, 9 in die Zwikkelräume 41, 41' austreten. Er kann erst die Leimübertragswalzen 4, 5 berühren und wird durch die Dosierwalzen 6, 7 dosiert. Die Teilbahnen 10, 11 sind einseitige Wellpappenbahnen. Sie bestehen aus einer Deckbahn und einer Wellbahn. Die Teilbahnen 10, 11 liegen mit ihren Wellbahnen an den Leimübertragswalzen 4, 5 an und werden über Andrückelemente 47, 48 gleichmäßig angedrückt. Hierdurch wird der Leim von den Leimübertragswalzen 4, 5 auf die Scheitel der Wellbahnen übertragen.

Die in den angegebenen Pfeilrichtungen zulaufenden Teilbahnen 10, 11 werden über Vorheizvorrichtungen 15, 16 geführt. Diese können z. B. gekrümmte Segmente sein, die beheizt sind. Durch diese werden die Deckbahnen der Teilbahnen 10, 11 erwärmt. Zusätzlich kann eine Wärmevorrichtung 20, 21 vorgesehen sein, die die andere Außenseite der Teilbahn 10, 11, also die Wellbahn, erhitzt. Hierfür kann z. B. eine Dampfkammer Verwendung finden.

Die Teilbahn 10 wird anschließend an die Leimübertragswalze 4 über eine Umlenkwalze 22 geführt, die so angeordnet ist, daß von der Teilbahn 10 und von der Leimübertragswalze 4 abspritzender Leim von der Auffangrinne 45 aufgenommen werden kann. Im unteren Leimwerk 3 wird der abspritzende Leim von einer wassergekühlten Leimschürze 50 aufgefangen und der Auffangrinne 46 zugeführt. Anschließend gelangt die Teilbahn 11 zur raumfesten Zusammenführungsstelle A für die Teilbahnen 10, 11, die vom Walzenpaar 24 gebildet wird. Die Walzen 22, 23 und 25 können beheizt sein.

Die Teilbahn 11 ist ebenso über die Vorheizvorrichtung 16 mit Wärmevorrichtung 21 in Form z. B. einer Dampfdruckkammer und eine Umlenkwalze 30 in der angegebenen Pfeilrichtung der Leimübertragswalze 5 zugeführt. Nach Leimauftrag gelangt diese zu der Zusammenführungsstelle A des Walzenpaares 24. Auch die Walze 30 kann beheizt sein.

Das Leimwerk 3 ist etwa in gleicher Weise wie das Leimwerk 2 ausgebildet und wird nicht nochmals beschrieben.

Bei der Teilbahn 11 ist gleichfalls die Wellbahn der Leimauftragswalze 5 zugekehrt.

Eine weitere Teilbahn 31, z. B. eine glatte Deckbahn, wird über eine Umlenkwalze 32 in der angegebenen Pfeilrichtung über eine Heizvorrichtung 33 zugeführt, welche z.B. aus parallelen, übereinander angeordneten Heizplatten bestehen kann. Am einen Ende der Heizvorrichtung 33 ist eine Umlenkwalze 34 vorgesehen. Auf diese Weise erfolgt durch die Heizvorrichtung 33 eine beidseitige Beheizung der Deckbahn, die die Teilbahn 31 bildet.

Von der Heivorrichtung 33 läuft die Teilbahn 31 der unteren Umlenkwalze 25 des Walzenpaares 24 zu, umschlingt diese teilweise und bildet als untere Teilbahn die Deckbahn für die darüber befindliche einseitige Wellpappenbahn, über der sich wiederum die andere einseitige Wellpappenbahn befindet, deren Wellbahn der darunter befindlichen Deckbahn zugeordnet ist.

Über die Umlenkwalze 23 kann wie üblich ein Fördergurt 35 geführt sein, der sich über die Heizvorrichtung 38 für die zu verklebenden Teilbahnen erstreckt.

Die Leimwerke 2, 3 sowie die Wärmevorrichtungen 15, 16, 20, 21 und die Umlenkwalzen 22, 30 sind auf seitlichen Schildern 35 befestigt.

Diese sind über Rollen 36 auf Schienen 37 einstellbar verschiebbar.

Vorzugsweise sind die Leimübertragswalzen 4, 5 mit ihren Mittelachsen in einer Vertikalebene angeordnet. Bei Verschieben der Gestellschilder 35 werden daher die Abstände der Leimübertragsstellen B, C gegenüber der Zusammenführungsstelle A der Teilbahn 10, 11 verändert. Diese Veränderung kann durch entsprechendes Verschieben abhängig von der Bahngeschwindigkeit erfolgen. Die Verschiebung kann manuell wählbar, aber auch selbsttätig, abhängig von der Bahngeschwindigkeit, erfolgen.

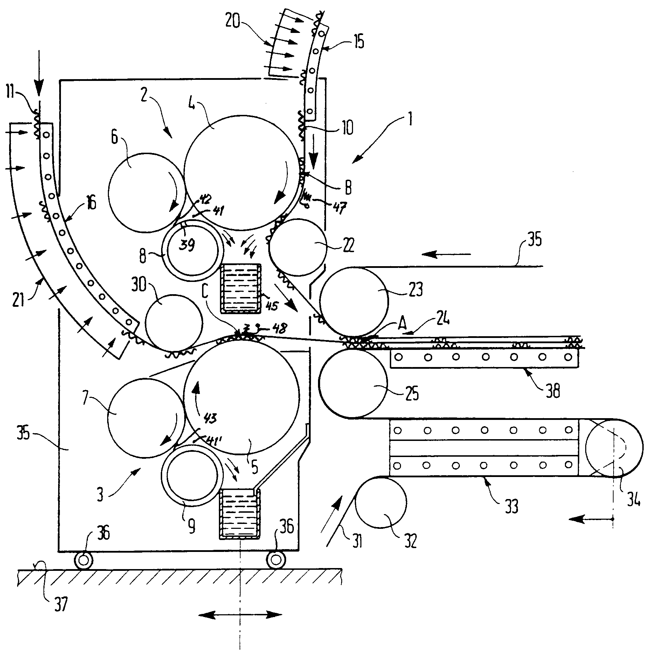

## Patentansprüche

1. Verfahren zum Herstellen von Wellpappe, bei dem
a) die Wellpappe durch Verkleben von mehreren Teilbahnen (10, 11, 31) an jeweils zwei einander zugekehrten Oberflächen hergestellt wird und
b) mehrere Teilbahnen (10, 11, 31) einer Zusammenführungsstelle (A) zugeführt und anschließend über eine Heizvorrichtung (38) geführt werden,
c) wobei der Abstand zwischen einer oder mehreren Leimauftragsstellen (B, C) und der Zusammenführungsstelle (A) der Teilbahnen (10, 11) abhängig von der Bahngeschwindigkeit verändert wird,
**dadurch gekennzeichnet**,
d) daß zusammen mit der Veränderung des Abstands zwischen der oder den Leimauftragsstellen (B, C) und der Zusammenführungsstelle (A) auch eine Veränderung der Abstände zwischen Vorheizvorrichtungen (15, 20; 16, 21) und der Zusammenführungsstelle (A) erfolgt, wobei der Abstand zwischen den Vorheizvorrichtungen (15, 20; 16,21) und den Leimauftragsstellen (B, C) konstant bleibt.

2. Verfahren nach Anspruch 1, **dadurch gekennzeichnet**, daß der Abstand der Leimwerke (2, 3) gegenüber der Zusammenführungsstelle (A) für die Teilbahnen (10, 11) in Bahnlängsrichtung oder quer zur Bahnebene abhängig von der Bahngeschwindigkeit verändert wird.

3. Verfahren nach Anspruch 1 oder 2, **dadurch gekennzeichnet**, daß die Teilbahnen (10, 11, 31) vor und/oder nach dem Leimauftrag von ihren beiden Außenseiten her erwärmt werden.

4. Verfahren nach einem der vorhergehenden Ansprüche, **dadurch gekennzeichnet**,daß die Leimwerke (2, 3) zur Wartung von der Heizvorrichtung (38) abfahrbar sind.

5. Einrichtung zum Herstellen von Wellpappe,
a) mit zumindest einem Leimwerk (2, 3) für das Beleimen einer (10, 11) von zumindest zwei zu verklebenden Teilbahnen (10, 11, 31), welche in einer Zusammenführungsstelle (A) zusammengeführt sind,
b) wobei das Leimwerk (2, 3) zur Veränderung des Abstands zwischen der Leimauftragsstelle (B, C) und der Zusammenführungsstelle (A) der Teilbahnen (10, 11) abhängig von der Bahngeschwindigkeit verschiebbar ist, und
c) mit einer der Zusammenführungsstelle (A) nachgeordneten Heizvorrichtung (38) für die zu verklebenden zusammengeführten Teilbahnen (10, 11, 31),
**dadurch gekennzeichnet**,
d) daß unmittelbar vor dem zumindest einen Leimwerk (2, 3) eine Vorheizvorrichtung (15, 16) für das Vorheizen der zu beleimenden Teilbahn vorgesehen ist und
e) daß die zumindest eine Vorheizvorrichtung (15, 16) zusammen mit dem zumindest einen Leimwerk (2, 3) verschiebbar ist.

6. Einrichtung nach Anspruch 5, **dadurch gekennzeichnet**, daß die Leimwerke (2, 3) für mehrere zu beleimende Teilbahnen (10, 11) übereinander angeordnet und gemeinsam verschiebbar sind.

7. Einrichtung nach Anspruch 5 oder 6, **dadurch gekennzeichnet**, daß die Leimwerke (2, 3) höhenmäßig bewegbar sind.

8. Einrichtung nach Anspruch 9, **dadurch gekennzeichnet**, daß die Vorheizvorrichtungen (15, 20; 16, 21; 33) für das beidseitige Beheizen der betreffenden Teilbahn (10, 11, 31) ausgebildet sind.

## Claims

1. A method for the manufacture of corrugated cardboard, in which
a) the corrugated cardboard is manufactured by gluing a plurality of partial webs (10, 11, 31) each to two facing surfaces, and
b) a plurality of partial webs (10, 11, 31) are fed to a junction point (A) and then are passed across a heating device (38),
c) the distance between one or more adhesive application points (B, C) and the junction point (A) for the partial webs (10, 11) being changed dependent on the speed of the web,
characterised in that
d) together with the change in the distance between the adhesive application point or points (B, C) and the junction point (A) a change in the distances between preheating devices (15, 20; 16, 21) and the junction point (A) is also effected, the distance between the preheating devices (15, 20; 16, 21) and the adhesive application points (B, C) remaining constant.

2. A method according to Claim 1, characterised in that the distance of the gluing mechanisms (2, 3) relative to the junction point (A) for the partial webs (10, 11) in the longitudinal direction of the web or transversely to the web plane is changed dependent on the speed of the web.

3. A method according to Claim 1 or 2, characterised in that the partial webs (10, 11, 31) are heated from both their outer sides before and/or after the application of adhesive.

4. A method according to one of the preceding Claims, characterised in that the gluing mechanisms (2, 3) can be moved away from the heating device (38) for maintenance.

5. An apparatus for manufacturing corrugated cardboard,
a) having at least one gluing means (2, 3) for gluing one (10, 11) of at least two partial webs (10, 11, 31) which are to be glued, which are brought together in a junction point (A),
b) the gluing means (2, 3) being displaceable dependent on the speed of the web in order to change the distance between the adhesive application point (B, C) and the junction point (A) for the partial webs (10, 11),
c) having a heating device (38) for the partial webs (10, 11, 31) which have been brought together and are to be glued, which succeeds the junction point (A),
characterised in that
d) a preheating device (15, 16) for preheating the partial web which is to be provided with adhesive is provided immediately before the at least one gluing means (2, 3) and
e) that the at least one preheating device (15, 16) is displaceable together with the at least one gluing means (2, 3).

6. An apparatus according to Claim 5, characterised in that the gluing means (2, 3) for a plurality of partial webs (10, 11) which are to be provided with adhesive are arranged one above the other and are jointly displaceable.

7. An apparatus according to Claim 5 or 6, characterised in that the gluing means (2, 3) are vertically movable.

8. An apparatus according to Claim 9 [sic], characterised in that the preheating devices (15, 20; 16, 21; 33) are designed for two-sided heating of the partial web (10, 11, 31) in question.

## Revendications

1. Procédé de fabrication de carton ondulé, dans lequel
(a) le carton ondulé est fabriqué par collage de plusieurs bandes partielles (10, 11, 31) par des couples de surfaces respectives tournées l'une vers l'autre, et
(b) plusieurs bandes partielles (10, 11, 31) sont amenées à un emplacement de jonction (A) puis guidées au-dessus d'un dispositif de chauffage (38),
(c) la distance entre l'emplacement d'encollage (B, C) et l'emplacement de jonction (A) des bandes partielles (10, 11) étant modifiée en fonction de la vitesse des bandes,
caractérisé en ce que
(d) en même temps que la modification de la distance entre le ou les emplacements d'encollage (B, C) et l'emplacement de jonction (A), on effectue également une modification des distances entre des dispositifs de préchauffage (15, 20; 16, 21) et l'emplacement de jonction (A), la distance entre les dispositifs de préchauffage (15, 20; 16; 21) et les emplacements d'encollage (B, C) restant constante.

2. Procédé suivant la revendication 1, caractérisé en ce qu'on fait varier la distance des dispositifs d'encollage (2, 3) par rapport à l'emplacement de jonction (A) pour les bandes partielles (10, 11), en fonction de la vitesse des bandes, dans la direction longitudinale des bandes ou perpendiculairement au plan des bandes.

3. Procédé suivant la revendication 1 ou 2, caractérisé en ce que les bandes partielles (10, 11, 31) sont chauffées, avant et/ou après l'encollage, depuis leur deux faces extérieures.

4. Procédé suivant l'une des revendications précédentes, caractérisé en ce que les dispositifs d'encollage (2, 3) peuvent être éloignés du dispositif de chauffage (38) pour l'entretien.

5. Appareil de fabrication de carton ondulé,
(a) comprenant au moins un dispositif d'encollage (2, 3) pour l'encollage de l'une (10, 11) d'au moins deux bandes partielles (10, 11, 31) à coller, lesquelles sont rassemblées à un emplacement de jonction (A),
(b) le dispositif d'encollage (2, 3) étant déplaçable en fonction de la vitesse de la bande en vue de modifier la distance entre l'emplacement d'encollage (B, C) et l'emplacement de jonction des bandes partielles (10, 11), et
(c) comprenant un dispositif de chauffage (38) des bandes partielles (10, 11, 31) rassemblées à coller, disposé en aval de l'emplacement de jonction (A),
caractérisé en ce que
(d) il est prévu, immédiatement avant le dispositif d'encollage (2, 3), un dispositif de préchauffage (15, 16) pour le préchauffage de la bande partielle à encoller, et
(e) le dispositif de préchauffage (15, 16) peut être déplacé ensemble avec le dispositif d'encollage (2, 3).

6. Appareil suivant la revendication 5, caractérisé en ce que les dispositifs d'encollage (2, 3) pour plusieurs bandes partielles (10, 11) à encoller sont disposés les uns au-dessus des autres et sont déplaçables ensemble.

7. Appareil suivant la revendication 5 ou 6, caractérisé en ce que les dispositifs d'encollage (2, 3) peuvent être déplacés en hauteur.

8. Dispositif suivant la revendication 9, caractérisé en ce que les dispositifs de préchauffage (15, 20; 16, 21; 33) sont adaptés pour le chauffage sur les deux faces des bandes partielles (10, 11, 31) concernées.
